# FASCICULE DE BREVET EUROPEEN

(11) **EP 4 450 398 B1**
(45) Date de publication et mention de la délivrance du brevet: **18.06.2025**
(21) Numéro de dépôt: 24162461.8
(22) Date de dépôt: 08.03.2024
(51) Int. Cl.: B64D 29/02, F02C 7/25, B64D 45/00, A62C 3/08, A62C 35/02

(54) **ENSEMBLE POUR UN AÉRONEF, LEDIT ENSEMBLE COMPORTANT UN MAT ET UN RÉSERVOIR CONTENANT UN AGENT EXTINCTEUR**
ANORDNUNG FÜR EIN FLUGZEUG, BESAGTE ANORDNUNG MIT EINEM MAST UND EINEM TANK MIT EINEM LÖSCHMITTEL
ASSEMBLY FOR AN AIRCRAFT, SAID ASSEMBLY COMPRISING A MAST AND A TANK CONTAINING A FIRE-EXTINGUISHING AGENT

(30) Priorité: 21.04.2023 FR 2304025
(43) Date de publication de la demande: 23.10.2024
(73) Titulaire: AIRBUS OPERATIONS (S.A.S.), 31060 Toulouse (FR)
(72) Inventeur: GELIOT, Jean, 31060 Toulouse (FR); BADERSPACH, Jérôme, 31060 Toulouse (FR); GARAY, Dimitri, 31060 Toulouse (FR)
(74) Mandataire: Airbus-OPS SAS

(56) Documents cités:
- US-A1- 2010 230 122
- US-A1- 2019 054 332
- US-A1- 2020 298 036
- US-A1- 2021 188 457
- US-A1- 2023 000 697

## Description

### DOMAINE TECHNIQUE

La présente invention concerne un ensemble pour un aéronef, ledit ensemble comportant un mât et un réservoir contenant un agent extincteur, ainsi qu'un aéronef comportant au moins un tel ensemble.

### ÉTAT DE LA TECHNIQUE ANTÉRIEURE

Un aéronef comporte classiquement au moins une nacelle à l'intérieur de laquelle est disposé un moteur, par exemple du type turboréacteur. La nacelle et le moteur sont fixés à la structure de l'aéronef par l'intermédiaire d'un mât fixé sous l'aile de l'aéronef.

Afin d'éviter l'endommagement de la structure de l'aéronef lorsque le moteur prend feu, l'aéronef est équipé d'un système anti-incendie qui comporte deux réservoirs.

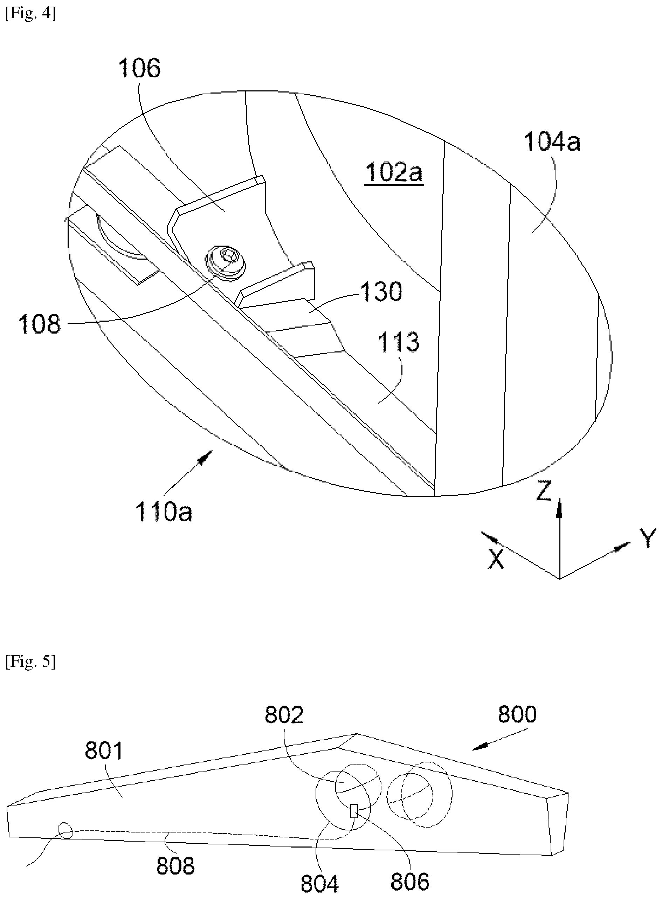

La Fig. 5 montre un ensemble 800 de l'état de la technique qui comporte un mât 801 et deux réservoirs 802 qui sont installés dans le mât 801 et qui contiennent chacun un agent extincteur. Chaque réservoir 802 est ici sphérique et pour chaque réservoir 802, le mât 801 présente une ouverture 804 qui traverse une paroi latérale du mât 801 et par laquelle le réservoir 802 est introduit et fixé à l'intérieur du mât 801.

Chaque réservoir 802 est équipé d'une tête de décharge 806 qui comporte un opercule qui ferme le réservoir 802 et une cartouche explosive qui détruit l'opercule lorsqu'elle est activée. Pour chaque réservoir 802, le système anti-incendie comporte également une canalisation de décharge 808 qui s'étend à l'intérieur du mât 801 entre la tête de décharge 806 et le moteur. La destruction de l'opercule permet de libérer l'agent extincteur qui s'écoule ou s'échappe alors dans la canalisation de décharge 808 vers le moteur.

Pour des raisons environnementales, les produits extincteurs qui sont actuellement utilisés tels que le Halon, doivent être remplacés par de nouveaux produits extincteurs. Ces nouveaux produits extincteurs nécessitent un volume plus important pour remplir leur fonction et il est donc nécessaire d'agrandir chaque réservoir 802.

Chaque réservoir 802 devient alors plus lourd et l'espace à l'intérieur du mât 801 restant restreint, la manipulation et la mise en place du réservoir 802 deviennent ardues. Le document US2021/188457 divulgue un réservoir selon l'art antérieur.

Il est donc nécessaire de trouver une installation différente pour améliorer l'installation existante afin de faciliter la mise en place et le retrait de chaque réservoir.

### EXPOSÉ DE L'INVENTION

Un objet de la présente invention est de proposer un ensemble pour un aéronef, où ledit ensemble comporte un mât et au moins un réservoir contenant un agent extincteur, et pour le ou chaque réservoir un système qui assure une installation améliorée du réservoir dans le mât. À cet effet, est proposé un ensemble pour un aéronef, ledit ensemble comportant :
- un mât s'étendant selon une direction longitudinale et comportant un châssis et deux parois latérales disposées de part et d'autre du châssis, chacune pourvue d'une ouverture,
- au moins un réservoir comportant des moyens de fixation et destiné à contenir un agent extincteur,
- pour chaque réservoir, un support comportant deux éléments de support et décalé le long de la direction longitudinale par rapport auxdites ouvertures, où chaque élément de support présente une première face d'appui orientée vers le haut et sur laquelle les moyens de fixation sont en appui, où chaque élément de support présente une extrémité proximale du côté desdites ouvertures et une extrémité distale du côté opposé auxdites ouvertures, où chaque extrémité proximale est fixée au châssis par au moins un premier moyen de fixation qui assure une fixation amovible de ladite extrémité proximale, où chaque extrémité distale est montée mobile en rotation sur le châssis autour d'un axe de rotation horizontal et perpendiculaire à la direction longitudinale et où chaque élément de support est mobile entre une position d'utilisation dans laquelle la première face d'appui associée est horizontale et une position de mise en place dans laquelle la première face d'appui est basculée vers le bas,
- pour chaque réservoir et pour chaque élément de support, des éléments de fixation qui assurent la fixation des moyens de fixation dudit réservoir à ledit élément de support.

Un tel ensemble permet un retrait et une mise en place aisés du réservoir à l'intérieur du mât. Avantageusement, l'ensemble comporte, pour chaque élément de support, une butée contre laquelle ledit élément de support est en appui en position de mise en place. Avantageusement, chaque premier moyen de fixation prend la forme, au niveau de l'extrémité proximale, d'un boulon comportant un premier écrou fixé au châssis et une première vis de serrage qui se visse dans le premier écrou à travers un premier alésage de l'élément de support associé.

Avantageusement, la tête de vis de chaque première vis de serrage est accessible depuis l'intérieur du châssis entre les éléments de support.

Avantageusement, la rotation de chaque élément de support est réalisée par la mise en place d'un deuxième moyen de fixation qui prend la forme, au niveau de l'extrémité distale, d'un boulon comportant un deuxième écrou fixé au châssis et une deuxième vis de serrage qui se visse dans le deuxième écrou à travers un deuxième alésage de l'élément de support. Avantageusement, la tête de vis de chaque deuxième vis de serrage est accessible depuis l'intérieur du châssis entre les éléments de support.

Avantageusement, l'ensemble comporte au niveau de l'extrémité distale de chaque élément de support, un premier moyen de fixation comportant un boulon avec un premier écrou fixé au châssis et une première vis de serrage qui se visse dans le premier écrou à travers un premier alésage de l'élément de support associé.

Avantageusement, au niveau de chaque extrémité distale, le premier moyen de fixation est disposé au-dessous du deuxième moyen de fixation.

Avantageusement, chaque première face d'appui est équipée d'au moins une marche agencée de manière à ce qu'en position de mise en place, un moyen de fixation se trouve à l'arrière d'une marche par rapport au sens descendant de la première face d'appui.

L'invention propose également un aéronef comportant un ensemble selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue de côté d'ensembles selon l'invention,
[Fig. 3] est une vue en perspective d'un ensemble de la Fig. 2,
[Fig. 4] est une vue en perspective d'un détail de mise en place d'un réservoir sur un ensemble selon l'invention, et
[Fig. 5] est une vue en perspective d'un ensemble de l'état de la technique.

### EXPOSÉ DÉTAILLE DE MODES DE RÉALISATION

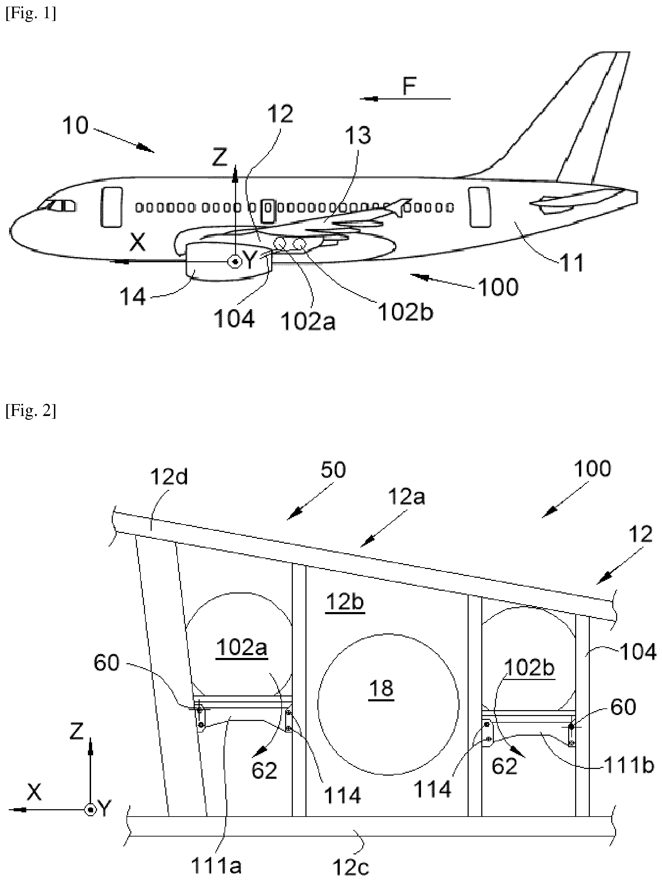

La Fig. 1 montre un aéronef 10 qui comporte un fuselage 11 de chaque côté duquel est fixée une aile 13 qui porte un moteur 14 comme par exemple un turboréacteur double flux.

Pour chaque moteur 14, l'aéronef 10 comporte également un mât 12 qui assure la fixation du moteur 14 sous l'aile 13.

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale du mât qui supporte le moteur et qui est parallèle à l'axe longitudinal de l'aéronef et orienté vers l'avant, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 10 lors du fonctionnement du moteur 14, cette direction étant représentée schématiquement par la flèche F.

Pour chaque moteur 14, l'aéronef 10 comporte un système anti-incendie 100 qui comporte au moins un réservoir 102a-b rempli d'un agent extincteur et, pour chaque réservoir 102a-b, une canalisation de décharge 104 qui s'étend entre ledit réservoir 102a-b et le moteur 14 soutenu par ledit mât 12.

Comme pour l'état de la technique, le réservoir 102a est équipé d'une tête de décharge qui est arrangée pour libérer l'agent extincteur vers la canalisation de décharge 104 en cas de besoin. Les Figs. 2 à 4 montrent un ensemble 50 selon l'invention qui comporte le mât 12 et au moins un réservoir 102a-b. Dans le mode de réalisation de l'invention présenté ici, il y a deux réservoirs 102a-b, mais l'invention s'applique de la même manière pour un seul réservoir 102a-b. Dans la suite de la description, sauf précision particulière, il est fait référence à un seul réservoir 102a.

Le mât 12 s'étend classiquement selon la direction longitudinale X et comporte une structure constituée d'un châssis 12a et de parois 12b fixées autour du châssis 12a. Le mât 12 est globalement symétrique par rapport à un plan médian vertical XZ du mât 12 qui passe par l'axe du moteur 14. Le mât 12 prend la forme d'un caisson qui comporte entre autres une paroi inférieure 12c, une paroi supérieure 12d et deux parois latérales 12b qui sont verticales et qui s'étendent de part et d'autre du plan médian vertical XZ du mât 12.

Le châssis 12a est constitué ici de plusieurs profilés 104 fixés les uns aux autres et sur lesquels les parois 12b-d sont fixées.

Les deux parois latérales 12b sont ainsi fixées de part et d'autre du châssis 12a dans des plans globalement verticaux et parallèles au plan médian.

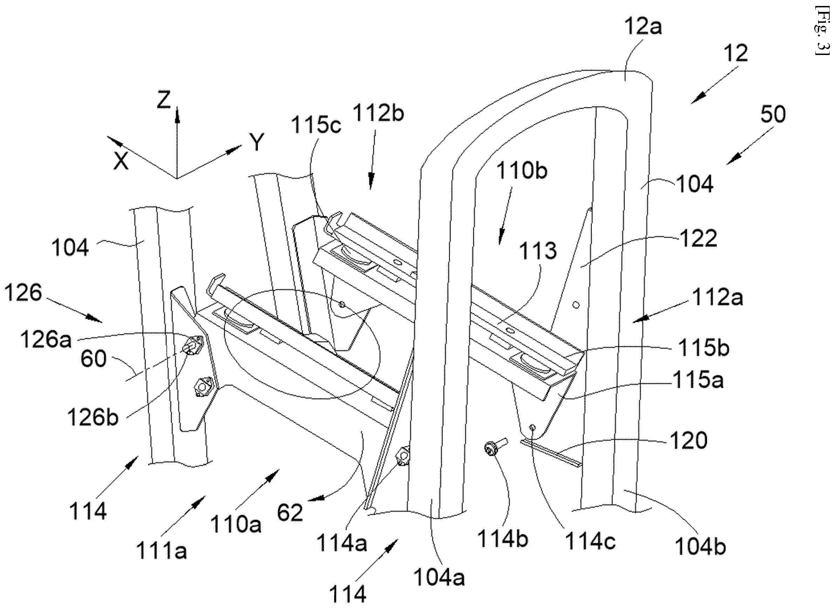

Comme le montrent les Figs. 2 et 3, chaque profilé 104 prend ici la forme d'une arche qui s'étend dans un plan globalement perpendiculaire à la direction longitudinale X et qui comporte deux poteaux 104a-b qui sont orientés verticalement et disposés de part et d'autre du plan médian XZ. Les poteaux 104a-b sont ainsi écartés l'un de l'autre pour laisser libre le passage entre eux pour le réservoir 102a. D'une manière générale, le châssis 12a est ouvert pour autoriser le passage du réservoir 102a entre les éléments qui constituent ledit châssis 12a.

Chaque paroi latérale 12b est percée d'une ouverture 18 (vue en arrière-plan sur la Fig. 2) qui permet d'accéder à l'intérieur du mât 12 et du châssis 12a depuis l'extérieur du mât 12 et l'ouverture 18 est dimensionnée pour autoriser le passage du réservoir 102a. Les deux ouvertures 18 sont disposées l'une en face de l'autre par rapport au plan médian XZ. Comme le montre la Fig. 4, le réservoir 102a est équipé des moyens de fixation 106 qui sont disposés de part et d'autre du plan médian XZ lorsque le réservoir 102a est en place. Comme expliqué ci-dessous, lorsque le réservoir 102a est placé dans le mât 12 à travers l'ouverture 18, les moyens de fixation 106 sont accessibles depuis chaque ouverture 18. Les moyens de fixation 106 sont ici des pattes et ils coopèrent avec des éléments de fixation 108 pour assurer la fixation du réservoir 102a à l'intérieur du mât 12 lorsque le réservoir 102a est en place. L'ensemble 50 comporte également un support 111a-b qui est monté à l'intérieur du châssis 12a, ici entre deux arches voisines. Bien sûr, lorsqu'il y a plusieurs réservoirs 102a-b, il y a un support 111a-b par réservoir 102a-b.

Dans le mode de réalisation de l'invention présenté sur les Figs. 2 à 4, le support 111a-b comporte deux éléments de support 110a-b, chacun s'étendant ici parallèlement à la direction longitudinale X. Chaque élément de support 110a-b présente ici une première face d'appui 113 orientée vers le haut et chaque moyen de fixation 106 est en appui sur une première face d'appui 113 par une deuxième face d'appui qu'il présente et qui est orientée vers le bas. Ainsi, lorsque le réservoir 102a-b est en place sur l'élément de support 110a-b, chaque deuxième face d'appui est en appui contre une première face d'appui 113.

Les éléments de fixation 108 assurent la fixation des moyens de fixation 106 du réservoir 102a à un élément de support 110a-b et chacun prend par exemple la forme d'une vis qui se visse dans l'élément de support 110a-b dans un alésage prévu à cet effet en traversant le moyen de fixation 106.

Le support 111a-b est décalé le long de la direction longitudinale X par rapport aux ouvertures 18, et comme le montre la Fig. 2, il y a un support 111a qui est vers l'avant par rapport aux ouvertures 18 et un support 111b qui est à l'arrière par rapport aux ouvertures 18. Il est ainsi possible de disposer un réservoir 102a à l'avant des ouvertures 18 et un à l'arrière. Chaque élément de support 110a-b présente une extrémité proximale 112a qui est du côté des ouvertures 18 et une extrémité distale 112b qui est du côté opposé auxdites ouvertures 18.

Ainsi, le support 111a présente ses extrémités proximales 112a vers l'arrière et ses extrémités distales 112b vers l'avant, et le support 111b présente ses extrémités proximales 112a vers l'avant et ses extrémités distales 112b vers l'arrière.

Chaque extrémité proximale 112a est fixée au châssis 12a, ici à un des deux poteaux 104a-b constituant un profilé 104, par au moins un premier moyen de fixation 114 qui assure une fixation amovible de l'extrémité proximale 110a au châssis 12a.

Dans le mode de réalisation de l'invention présenté sur la Fig. 2, il y a deux premiers moyens de fixation 114 par extrémité proximale 112a pour assurer une redondance, et chacun est ici un boulon comportant un premier écrou 114a fixé au châssis 12a et une première vis de serrage 114b qui se visse dans le premier écrou 114a à travers un premier alésage 114c de l'élément de support 110a-b. La tête de vis de chaque première vis de serrage 114b est accessible depuis l'intérieur du châssis 12a entre les éléments de support 110a-b pour que l'opérateur ne soit pas gêné par les parois latérales 12b. Les têtes des premières vis de serrage 114b d'un élément de support 110a-b sont ainsi en regard des têtes des premières vis de serrage 114b de l'autre élément de support 110b-a.

Chaque extrémité distale 112b est montée mobile en rotation sur le châssis 12a autour d'un axe de rotation 60 horizontal et perpendiculaire à la direction longitudinale X. Chaque élément de support 110a-b est ainsi mobile en rotation alternativement entre une position d'utilisation (Fig. 2) dans laquelle la première face d'appui 113 associée est horizontale et dans laquelle l'élément de support 110a-b est fixé par les premiers moyens de fixation 114 et une position de mise en place (Fig. 3) dans laquelle la première face d'appui 113 est basculée vers le bas et dans laquelle l'élément de support 110a-b n'est pas fixé par les premiers moyens de fixation 114.

Ainsi, lorsqu'un réservoir 102a-b doit être mis en place, chaque premier moyen de fixation 114 est retiré, pour libérer la rotation de chaque élément de support 110a-b qui, du fait de son poids pivote vers le bas autour de l'axe de rotation 60 comme le montre la flèche 62 pour arriver en position de mise en place. Dans cette position, la première face d'appui 113, c'est-à-dire le dessus de l'élément de support 110a-b, est orientée vers les ouvertures 18, ce qui facilite la mise en place du réservoir 102a-b sur les éléments de support 110a-b, et plus particulièrement les premières faces d'appui 113, et la mise en place des éléments de fixation 108 sur les moyens de fixation 106. Chaque élément de support 110a-b peut ensuite être relevé dans sa position d'utilisation, c'est-à-dire avec la première face d'appui 113 en position horizontale (dans le sens inverse à la flèche 62), et chaque premier moyen de fixation 114 est remis en place pour fixer la position de l'élément de support 110a-b.

Le retrait d'un réservoir 102a-b s'effectue de la même manière.

L'accès aux éléments de fixation 108 et aux premiers moyens de fixation 114 est ainsi facilité ce qui limite les risques pour un opérateur installant un réservoir 102a-b lourd et volumineux. Pour limiter la rotation de chaque élément de support 110a-b vers le bas et maintenir la position de mise en place, l'ensemble 50 comporte, pour chaque élément de support 110a-b, une butée 120 contre laquelle l'élément de support 110a-b est en appui en position de mise en place. Dans le mode de réalisation de l'invention présenté ici, c'est l'extrémité proximale 112a de l'élément de support 110a-b qui vient en appui contre la butée 120, ici par l'intermédiaire d'une languette dans laquelle sont réalisés les premiers alésages 114c des premiers moyens de fixation 114.

Dans le mode de réalisation de l'invention présenté à la Fig. 3, la butée 120 prend la forme d'un pli d'une ferrure 122 solidaire du châssis 12a, ici d'un poteau 104a-b, où la ferrure 122 porte également ici les premiers écrous 114a des premiers moyens de fixation 114.

Selon un mode de réalisation particulier, chaque butée 120 est disposée de manière à ce qu'en position de mise en place, la première face d'appui 113 présente un angle de 20° vers le bas avec l'horizontal.

Dans le mode de réalisation de l'invention présenté aux Figs. 2 et 3, la rotation de chaque l'élément de support 110a-b est réalisée par la mise en place au niveau de l'extrémité distale 112b de chaque élément de support 110a-b, d'un deuxième moyen de fixation 126 qui prend la forme d'un boulon comportant un deuxième écrou 126a fixé au châssis 12a et une deuxième vis de serrage 126b qui se visse dans le deuxième écrou 126a à travers un deuxième alésage de l'élément de support 110a-b. La tête de vis de chaque deuxième vis de serrage 126b est accessible également depuis l'intérieur du châssis 12a entre les éléments de support 110a-b.

En position d'utilisation, la deuxième vis de serrage 126b est serrée pour contribuer au maintien de l'élément de support 110a-b et en position de mise en place, la deuxième vis de serrage 126b est desserrée mais elle reste en prise avec le deuxième écrou 126a pour former un arbre autour duquel l'élément de support 110a-b pivote.

Pour assurer une redondance de fixation de l'extrémité distale 112b, l'ensemble 50 comporte au niveau de l'extrémité distale 112b de chaque élément de support 110a-b, un premier moyen de fixation 114, c'est-à-dire ici, un boulon avec un premier écrou 114a fixé au châssis 12a et une première vis de serrage 114b qui se visse dans le premier écrou 114a à travers un premier alésage 114c de l'élément de support 110a-b associé. La première vis de serrage 114b se dévisse entièrement pour être retirée pour permettre la rotation de l'élément de support 110a-b.

Pour un meilleur accès en position de mise en place, dans le mode de réalisation de l'invention présenté sur la Fig. 3, au niveau de l'extrémité distale 112b, le premier moyen de fixation 114 est disposé au-dessous du deuxième moyen de fixation 126.

Pour assurer le maintien du réservoir 102a sur les éléments de support 110a-b en position de mise en place et éviter le déplacement des moyens de fixation 106 le long des premières faces d'appui 113 du fait de l'angle d'inclinaison, chaque première face d'appui 113 est équipée d'au moins une marche 130. Lors de la mise en place du réservoir 102, celui-ci est mis en place de manière à ce que sur chaque première face d'appui 113, un moyen de fixation 106 se trouve à l'arrière d'une marche 130 par rapport au sens descendant de la première face d'appui 113 en position de mise en place, pour être bloqué par celle-ci.

Dans le mode de réalisation de l'invention présenté sur les Figs. 3 et 4, chaque élément de support 110a-b comporte une poutre inférieure 115a qui comporte les premiers alésages 114c et le deuxième alésage et une poutre supérieure 115b fixée sur la poutre inférieure 115a par l'intermédiaire d'entretoises et présentant la première face d'appui 113.

## Revendications

1. Ensemble (50) pour un aéronef (10), ledit ensemble (50) comportant :
- un mât (12) s'étendant selon une direction longitudinale (X) et comportant un châssis (12a) et deux parois latérales (12b) disposées de part et d'autre du châssis (12a), chacune pourvue d'une ouverture (18),
- au moins un réservoir (102a-b) comportant des moyens de fixation (106) et destiné à contenir un agent extincteur,
- pour chaque réservoir (102a-b), un support (111a-b) comportant deux éléments de support (110a-b)
**caractérisé en ce que** chaque support (111a-b) est décalé le long de la direction longitudinale (X) par rapport auxdites ouvertures (18), où chaque élément de support (110a-b) présente une première face d'appui (113) orientée vers le haut et sur laquelle les moyens de fixation (106) sont en appui, où chaque élément de support (110a-b) présente une extrémité proximale (112a) du côté desdites ouvertures (18) et une extrémité distale (112b) du côté opposé auxdites ouvertures (18), où chaque extrémité proximale (112a) est fixée au châssis (12a) par au moins un premier moyen de fixation (114) qui assure une fixation amovible de ladite extrémité proximale (112a), où chaque extrémité distale (112b) est montée mobile en rotation sur le châssis (12a) autour d'un axe de rotation (60) horizontal et perpendiculaire à la direction longitudinale (X) et où chaque élément de support (110a-b) est mobile entre une position d'utilisation dans laquelle la première face d'appui (113) associée est horizontale et une position de mise en place dans laquelle la première face d'appui (113) est basculée vers le bas,
- pour chaque réservoir (102a-b) et pour chaque élément de support (110a-b), des éléments de fixation (108) qui assurent la fixation des moyens de fixation (106) dudit réservoir (102a-b) à ledit élément de support (110a-b).

2. Ensemble (50) selon la revendication 1, **caractérisé en ce qu'**il comporte, pour chaque élément de support (110a-b), une butée (120) contre laquelle ledit élément de support (110a-b) est en appui en position de mise en place.

3. Ensemble (50) selon l'une des revendications 1 ou 2, **caractérisé en ce que** chaque premier moyen de fixation (114) prend la forme, au niveau de l'extrémité proximale (112a), d'un boulon comportant un premier écrou (114a) fixé au châssis (12a) et une première vis de serrage (114b) qui se visse dans le premier écrou (114a) à travers un premier alésage (114c) de l'élément de support (110a-b) associé.

4. Ensemble (50) selon la revendication 3, **caractérisé en ce que** la tête de vis de chaque première vis de serrage (114b) est accessible depuis l'intérieur du châssis (12a) entre les éléments de support (110a-b).

5. Ensemble (50) selon l'une des revendications 1 à 4, **caractérisé en ce que** la rotation de chaque élément de support (110a-b) est réalisée par la mise en place d'un deuxième moyen de fixation (126) qui prend la forme, au niveau de l'extrémité distale (112b), d'un boulon comportant un deuxième écrou (126a) fixé au châssis (12a) et une deuxième vis de serrage (126b) qui se visse dans le deuxième écrou (126a) à travers un deuxième alésage de l'élément de support (110a-b).

6. Ensemble (50) selon la revendication 5, **caractérisé en ce que** la tête de vis de chaque deuxième vis de serrage (126b) est accessible depuis l'intérieur du châssis (12a) entre les éléments de support (110a-b).

7. Ensemble (50) selon l'une des revendications 5 ou 6, **caractérisé en ce qu'**il comporte au niveau de l'extrémité distale (112b) de chaque élément de support (110a-b), un premier moyen de fixation (114) comportant un boulon avec un premier écrou (114a) fixé au châssis (12a) et une première vis de serrage (114b) qui se visse dans le premier écrou (114a) à travers un premier alésage (114c) de l'élément de support (110a-b) associé.

8. Ensemble (50) selon la revendication 7, **caractérisé en ce qu'**au niveau de chaque extrémité distale (112b), le premier moyen de fixation (114) est disposé au-dessous du deuxième moyen de fixation (126).

9. Ensemble (50) selon l'une des revendications 1 à 8, **caractérisé en ce que** chaque première face d'appui (113) est équipée d'au moins une marche (130) agencée de manière à ce qu'en position de mise en place, un moyen de fixation (106) se trouve à l'arrière d'une marche (130) par rapport au sens descendant de la première face d'appui (113).

10. Aéronef (10) comportant un ensemble (50) selon l'une des revendications précédentes.

## Patentansprüche

1. Anordnung (50) für ein Flugzeug (10), wobei die Anordnung (50) Folgendes umfasst:
- einen Pylon (12), der sich entlang einer Längsrichtung (X) erstreckt und einen Rahmen (12a) und zwei Seitenwände (12b), die zu beiden Seiten des Rahmens (12a) angeordnet sind und jeweils über eine Öffnung (18) verfügen, umfasst,
- mindestens einen Behälter (102a-b), der Befestigungsmittel (106) umfasst und dazu bestimmt ist, ein Löschmittel zu enthalten,
- für jeden Behälter (102a-b) einen Träger (111a-b), der zwei Tragelemente (110a-b) umfasst, **dadurch gekennzeichnet, dass** jeder Träger (111a-b) in Bezug auf die Öffnungen (18) entlang der Längsrichtung (X) versetzt ist, wobei jedes Tragelement (110a-b) eine erste Anlagefläche (113) aufweist, die nach oben zeigt und auf der die Befestigungsmittel (106) anliegen, wobei jedes Tragelement (110a-b) ein proximales Ende (112a) auf der Seite der Öffnungen (18) und ein distales Ende (112b) auf der den Öffnungen (18) entgegengesetzten Seite aufweist, wobei jedes proximale Ende (112a) durch mindestens ein erstes Befestigungsmittel (114) an dem Rahmen (12a) befestigt ist, welches eine lösbare Befestigung des proximalen Endes (112a) gestattet, wobei jedes distale Ende (112b) um eine horizontale und zu der Längsrichtung (X) senkrechte Drehachse (60) drehbar an dem Rahmen (12a) angebracht ist und wobei jedes Tragelement (110a-b) zwischen einer Verwendungsposition, in der die assoziierte erste Anlagefläche (113) horizontal ist, und einer Einrichtungsposition, in der die erste Anlagefläche (113) nach unten geschwenkt ist, beweglich ist,
- für jeden Behälter (102a-b) und für jedes Tragelement (110a-b) Befestigungselemente (108), die die Befestigung der Befestigungsmittel (106) des Behälters (102a-b) an dem Tragelement (110a-b) gewährleisten.

2. Anordnung (50) nach Anspruch 1, **dadurch gekennzeichnet, dass** sie für jedes Tragelement (110a-b) einen Anschlag (120) umfasst, an dem das Tragelement (110a-b) in der Einrichtungsposition anliegt.

3. Anordnung (50) nach einem der Ansprüche 1 oder 2, **dadurch gekennzeichnet, dass** jedes erste Befestigungsmittel (114) an dem proximalen Ende (112a) die Form eines Bolzens annimmt, der eine erste Mutter (114a), die an dem Rahmen (12a) befestigt ist, und eine erste Spannschraube (114b), die durch eine erste Bohrung (114c) des assoziierten Tragelements (110a-b) hindurch in die erste Mutter (114a) eingeschraubt wird, umfasst.

4. Anordnung (50) nach Anspruch 3, **dadurch gekennzeichnet, dass** der Schraubenkopf jeder ersten Spannschraube (114b) von innerhalb des Rahmens (12a) zwischen den Tragelementen (110a-b) zugänglich ist.

5. Anordnung (50) nach einem der Ansprüche 1 bis 4, **dadurch gekennzeichnet, dass** das Drehen jedes Tragelements (110a-b) durch das Einrichten eines zweiten Befestigungsmittels (126) verwirklicht wird, welches an dem distalen Ende (112b) die Form eines Bolzens annimmt, der eine zweite Mutter (126a), die an dem Rahmen (12a) befestigt ist, und eine zweite Spannschraube (126b), die durch eine zweite Bohrung des Tragelements (110a-b) hindurch in die zweite Mutter (126a) eingeschraubt wird, umfasst.

6. Anordnung (50) nach Anspruch 5, **dadurch gekennzeichnet, dass** der Schraubenkopf jeder zweiten Spannschraube (126b) von innerhalb des Rahmens (12a) zwischen den Tragelementen (110a-b) zugänglich ist.

7. Anordnung (50) nach einem der Ansprüche 5 oder 6, **dadurch gekennzeichnet, dass** sie an dem distalen Ende (112b) jedes Tragelements (110a-b) ein erstes Befestigungselement (114) umfasst, das einen Bolzen mit einer ersten Mutter (114a), die an dem Rahmen (12a) befestigt ist, und einer ersten Spannschraube (114b), die durch eine erste Bohrung (114c) des assoziierten Tragelements (110a-b) hindurch in die erste Mutter (114a) eingeschraubt wird, umfasst.

8. Anordnung (50) nach Anspruch 7, **dadurch gekennzeichnet, dass** das erste Befestigungsmittel (114) an jedem distalen Ende (112b) unterhalb des zweiten Befestigungsmittels (126) angeordnet ist.

9. Anordnung (50) nach einem der Ansprüche 1 bis 8, **dadurch gekennzeichnet, dass** jede erste Anlagefläche (113) mit mindestens einer Stufe (130) ausgerüstet ist, die so eingerichtet ist, dass sich ein Befestigungsmittel (106) in der Einrichtungsposition in Bezug auf die Abwärtsrichtung der ersten Anlagefläche (113) hinter einer Stufe (130) befindet.

10. Flugzeug (10), das eine Anordnung (50) nach einem der vorhergehenden Ansprüche umfasst.

## Claims

1. Assembly (50) for an aircraft (10), said assembly (50) having:
- a pylon (12) extending along a longitudinal direction (X) and having a chassis (12a) and two side walls (12b) disposed on either side of the chassis (12a), each provided with an aperture (18),
- at least one reservoir (102a-b), which has fastening means (106) and is intended to contain an extinguishing agent,
- for each reservoir (102a-b), a support (111a-b) which has two support elements (110a-b), **characterized in that** each support (111a-b) is offset along the longitudinal direction (X) with respect to said apertures (18), wherein each support element (110a-b) has an upwardly facing first bearing face (113) against which the fastening means (106) bear, wherein each support element (110a-b) has a proximal end (112a) at said apertures (18) and a distal end (112b) on the opposite side to said apertures (18), wherein each proximal end (112a) is fastened to the chassis (12a) by at least one first fastening means (114) which ensures removable fastening of said proximal end (112a), wherein each distal end (112b) is mounted on the chassis (12a) rotatably about a horizontal axis of rotation (60) perpendicular to the longitudinal direction (X), and wherein each support element (110a-b) can be moved between a use position, in which the associated first bearing face (113) is horizontal, and a fitted position, in which the first bearing face (113) is tilted downwards,
- for each reservoir (102a-b) and for each support element (110a-b), fastening elements (108) which fasten the fastening means (106) of said reservoir (102a-b) to said support element (110a-b).

2. Assembly (50) according to Claim 1, **characterized in that** it has, for each support element (110a-b), a stop (120) against which said support element (110a-b) bears in the fitted position.

3. Assembly (50) according to either of Claims 1 and 2, **characterized in that** each first fastening means (114) takes the form, at the proximal end (112a), of a bolt having a first nut (114a) fastened to the chassis (12a) and a first clamping screw (114b) which is screwed in the first nut (114a) through a first bore (114c) in the associated support element (110a-b).

4. Assembly (50) according to Claim 3, **characterized in that** the screw head of each first clamping screw (114b) is accessible from the inside of the chassis (12a) between the support elements (110a-b).

5. Assembly (50) according to one of Claims 1 to 4, **characterized in that** the rotation of each support element (110a-b) is realized by the fitting of a second fastening means (126) which takes the form, at the distal end (112b), of a bolt having a second nut (126a) fastened to the chassis (12a) and a second clamping screw (126b) which is screwed in the second nut (126a) through a second bore in the support element (110a-b).

6. Assembly (50) according to Claim 5, **characterized in that** the screw head of each second clamping screw (126b) is accessible from the inside of the chassis (12a) between the support elements (110a-b).

7. Assembly (50) according to either of Claims 5 and 6, **characterized in that** it has, at the distal end (112b) of each support element (110a-b), a first fastening means (114) having a bolt with a first nut (114a) fastened to the chassis (12a) and a first clamping screw (114b) which is screwed in the first nut (114a) through a first bore (114c) in the associated support element (110a-b).

8. Assembly (50) according to Claim 7, **characterized in that**, at each distal end (112b), the first fastening means (114) is disposed below the second fastening means (126).

9. Assembly (50) according to one of Claims 1 to 8, **characterized in that** each first bearing face (113) is equipped with at least one step (130) arranged such that, in the fitted position, a fastening means (106) is located to the rear of a step (130) in relation to the descending direction of the first bearing face (113).

10. Aircraft (10) having an assembly (50) according to one of the preceding claims.
